# EUROPÄISCHE PATENTSCHRIFT

(11) **EP 1 760 305 B1**
(45) Veröffentlichungstag und Bekanntmachung des Hinweises auf die Patenterteilung: **02.02.2011**
(21) Anmeldenummer: 05019333.3
(22) Anmeldetag: 06.09.2005
(51) Int. Cl.: F02M 51/06, H01L 41/09, F16K 31/00

(54) **Kraftstoffeinspritzventil**
Fuel injection valve
Soupape d'injection de carburant

(43) Veröffentlichungstag der Anmeldung: 07.03.2007
(73) Patentinhaber: Continental Automotive GmbH, 30165 Hannover (DE)
(72) Erfinder: Kronberger, Maximilian, Dr., 93053 Regensburg (DE); Pirkl, Richard, 93055 Regensburg (DE); Reiländer, Udo, Dr., 87669 Rieden /a.F. (DE)

(56) Entgegenhaltungen:
- DE-A1- 10 101 799
- DE-A1- 10 220 498
- DE-B3- 10 326 707
- DE-C1- 19 858 758

## Beschreibung

Die Erfindung betrifft ein Kraftstoffeinspritzventil, das einen Aktor und einen Schließkörper umfasst. Der Schließkörper ist durch den Aktor bewegbar zum Öffnen und Schließen des Kraftstoffeinspritzventils.

Aktoren, die als Piezoaktoren ausgebildet sind, sind geeignet, ein damit ausgestattetes Ventil schnell zu öffnen und zu schließen. Piezoaktoren können jedoch prinzipbedingt ihre Längsausdehnung, die durch piezokeramisches Material gebildet ist, abhängig von einem elektrischen Feld, das in dem piezokeramischen Material wirkt, nur in einer Größenordnung von etwa 0,1% verändern. Durch eine Vergrößerung der Längsausdehnung des Antriebselements durch zusätzliches piezokeramisches Material kann der Hub eines solchen Aktors vergrößert werden. Dies erfordert jedoch einen entsprechend größeren Bauraum und ist teuer. Alternativ kann eine Hebelvorrichtung vorgesehen sein, die den Hub des Piezoaktors um einen Faktor vergrößert und dadurch einen entsprechend großen Hub eines Schließkörpers des Ventils ermöglicht.

In der DE 199 52 057 A1 ist ein Kraftstoffeinspritzventil offenbart, insbesondere für Brennstoffeinspritzanlagen von Brennkraftmaschinen, das einen Ventilschließkörper aufweist, der von einem Aktor mittels einer Ventilnadel betätigbar ist. Zwischen dem Aktor und der Ventilnadel sind schwenkbare Kippelemente so angeordnet, dass der Aktor an den ersten Hebelarmen der schwenkbaren Kippelemente angreift und die zweiten Hebelarme mit der Ventilnadel in Wirkverbindung stehen. Der Aktor umgibt die Ventilnadel ringförmig. Die schwenkbaren Kippelemente sind ebenfalls ringförmig um die Ventilnadel angeordnet.

In der DE 103 26 707 B3 sind eine Ventilvorrichtung und ein Verfahren zum Einblasen von gasförmigem Kraftstoff offenbart. Die Ventilvorrichtung umfasst eine Übersetzungseinrichtung, die einen ersten und einen zweiten Hebel mit jeweils einem Antriebspunkt und einem Abtriebspunkt aufweist. Der erste Hebel und der zweite Hebel sind jeweils um einen Lagerpunkt schwenkbar gelagert. Ein Aktor greift unmittelbar an dem Antriebspunkt des ersten Hebels an. Der Abtriebspunkt des ersten Hebels wirkt unmittelbar auf den Antriebspunkt des zweiten Hebels ein. Der Abtriebspunkt des zweiten Hebels wirkt unmittelbar auf ein Ventilelement ein. Ein Hub des Aktors wird über das erste und das zweite Hebelelement vergrößert auf das Ventilelement übertragen.

In der DE 102 20 498 A1 ist ein Injektor mit proportionaler Nadelsteuerung offenbart. Der Injektor umfasst einen Hebel zum Verstärken einer Bewegung eines Aktors und zum Übertragen der verstärkten Bewegung des Aktors auf ein Nadelventil. Der Aktor überträgt seine Bewegung über einen Stößelstift auf den Hebel. Das Nadelventil ist über einen Schaft mit einem Steuerkolben verbunden. Der Schaft hat einen geringeren Durchmesser als das Nadelventil und der Steuerkolben. In dem Hebel ist eine Nut ausgebildet, in die der Schaft eingebracht ist. Die Nut hat einen geringeren Durchmesser als das Nadelventil und der Steuerkolben. Zum Übertragen der Bewegung des Hebels auf das Nadelventil wirkt der Hebel in einem Bereich der Nut mit dem Schaft zusammen.

In der DE 198 58 758 C1 sind eine Vorrichtung und ein Verfahren zur Hubübertragung offenbart. Zwei einseitige Hebel sitzen jeweils an einem Drehpunkt eines Lagers auf. Ferner sitzen die Hebel jeweils an einem Hubpunkt auf einem Hubelement auf. Die Hebel liegen ferner an einem Krafteinleitungspunkt auf einem Antriebselement auf. Dadurch besteht ein mechanischer Kraftschluss zwischen dem Antriebselement und dem Hubelement. Abhängig von einem Hub des Antriebselements verändert sich eine Position des jeweiligen Krafteinleitungspunkts und somit ein Hubfaktor der Vorrichtung.

Die Aufgabe der Erfindung ist, ein Ventil zu schaffen, bei dem ein maximaler Öffnungszustand einfach erfassbar ist. Ferner ist die Aufgabe der Erfindung, ein Ventil zu schaffen, das zuverlässig ist.

Die Aufgabe wird gelöst durch die Merkmale des unabhängigen Patentanspruchs. Vorteilhafte Weiterbildungen der Erfindung sind in den Unteransprüchen gekennzeichnet.

Die Erfindung zeichnet sich aus durch ein Kraftstoffeinspritzventil, das einen Aktor, einen Schließkörper und eine mechanische Hebelvorrichtung umfasst. Der Schließkörper ist durch den Aktor bewegbar zum Öffnen und Schließen des Kraftstoffeinspritzventils. Der Hub des Schließkörpers ist abhängig von dem Hub des Aktors. Die mechanische Hebelvorrichtung umfasst mindestens ein erstes und ein zweites Hebelelement. Das erste und das zweite Hebelelement sind mechanisch in Reihe zwischen dem Aktor und dem Schließkörper angeordnet. Die Hebelelemente sind unmittelbar mechanisch miteinander gekoppelt. Eines der Hebelelemente ist so in der Bewegungsachse des Schließkörpers angeordnet, dass der Hub des Schließkörpers durch das Hebelelement begrenzt ist.

Der Vorteil ist, dass durch die mechanische Hebelvorrichtung auch sehr große Kräfte übertragen werden können und ein großer Hub des Schließkörpers erreicht werden kann, auch wenn nur ein geringer Bauraum zur Verfügung steht. So ist das Ventil insbesondere geeignet zum Einspritzen von Dieselkraftstoff bei einem Kraftstoffdruck von mehr als 2000 bar. Dadurch, dass mindestens zwei Hebelelemente genutzt werden, die mechanisch in Reihe zueinander angeordnet sind, kann die Hebelvorrichtung besonders steif ausgebildet werden. Dadurch ist es möglich, Hubverluste gering zu halten. Ferner muss der Aktor bei geeigneter Ausbildung der Hebelvorrichtung nur einen geringen Hub aufweisen, da der geringe Hub des Aktors über die Hebelvorrichtung in einen größeren Hub des Schließkörpers übersetzt werden kann. Dies ermöglicht, den Energiebedarf des Aktors gering zu halten.

Durch das direkte Koppeln des Aktors mit dem Schließkörper über die mechanische Hebelvorrichtung ohne Zwischenschaltung beispielsweise eines hydraulischen Steuerventils können Laständerungen an dem Schließkörper weitgehend ungedämpft auf den Aktor wirken. Ist der Aktor beispielsweise als ein Piezoaktor ausgebildet, dann sind diese Laständerungen erfassbar und können genutzt werden für ein präzises Ansteuern des Ventils.

Ein weiterer Vorteil ist, dass das Auftreffen des Schließkörpers auf das Hebelelement besonders gut über das Hebelelement auf den Aktor wirken kann, so dass an diesem ein besonders deutliches Signal erfassbar ist, das den maximalen Öffnungszustand des Ventils signalisiert. Dies kann genutzt werden, um das Ventil besonders präzise anzusteuern und so das Medium, z.B. den Kraftstoff, besonders präzise zumessen zu können. Ferner ist durch diese Anordnung des Hebelelements nur ein geringer Bauraum erforderlich.

In einer vorteilhaften Ausgestaltung weist der Schließkörper eine als seitlichen Eingriff ausgebildete Ausnehmung auf, die in eine Mantelfläche des Schließkörpers mündet und in die das zweite Hebelelement so eingreift, dass eine Kraft, die von dem zweiten Hebelelement auf den Schließkörper übertragen wird, bezogen auf einen Querschnitt des Schließkörpers etwa zentral angreift. Dies hat den Vorteil, dass dies besonders einfach und robust ist. Insbesondere ist eine solche Ausbildung und Anordnung des Schließkörpers und des zweiten Hebelelements vorteilhaft, um den Schließkörper gegen eine große Kraft von einem Ventilsitz des Ventils abzuheben. Ferner ist das Ventil so besonders zuverlässig, da ein Verkanten des Schließkörpers verhindert wird.

In einer alternativen vorteilhaften Ausgestaltung ist das zweite Hebelelement gabelförmig mit mindestens zwei Zinken ausgebildet. Der Schließkörper umfasst einen Bund. Das zweite Hebelelement greift mit den mindestens zwei Zinken an den Bund an zum Übertragen einer Kraft von dem zweiten Hebelelement auf den Schließkörper. Der Vorteil ist, dass die Kraft so einfach und zuverlässig auf den Schließkörper übertragen werden kann und der Schließkörper symmetrisch belastet ist und dadurch ein Verkanten verhindert wird.

In einer weiteren vorteilhaften Ausgestaltung der Erfindung umfasst die Hebelvorrichtung nur zwei Hebelelemente. Die Hebelvorrichtung ist so angeordnet, dass der Aktor auf das erste Hebelelement einwirkt und das zweite Hebelelement unmittelbar auf den Schließkörper einwirkt. Dies hat den Vorteil, dass die Hebelvorrichtung eine große Hebelwirkung aufweisen kann und Hubverluste aufgrund der wenigen Kontaktstellen gering sind.

In einer weiteren vorteilhaften Ausgestaltung der Erfindung ist die Hebelvorrichtung so ausgebildet, dass die Richtung des Hubs des Schließkörpers entgegengesetzt zu der Richtung des Hubs des Aktors verläuft. Eine solche Hubumkehr ist besonders geeignet für nach innen öffnende Ventile.

In einer weiteren vorteilhaften Ausgestaltung der Erfindung sind die Kraftwirkungsachse des Aktors und die Kraftwirkungsachse des Schließkörpers parallel versetzt zueinander angeordnet. Dadurch kann auf einfache Weise der Hebelarm zumindest eines der Hebelelemente lang ausgebildet sein und ermöglicht so eine hohe Übersetzung.

In einer weiteren vorteilhaften Ausgestaltung der Erfindung weist die mechanische Hebelvorrichtung abhängig von dem Hub des Aktors mindestens zwei voneinander unterschiedliche Übersetzungsverhältnisse auf. Dies hat den Vorteil, dass abhängig von dem Hub des Aktors entweder eine besonders große Kraftwirkung oder ein besonders großer Hub an dem Schließkörper bewirkt werden kann.

In diesem Zusammenhang ist es vorteilhaft, wenn mindestens eines der Hebelelemente oder dessen zugehöriges Widerlager eine Hebelfläche aufweist, die so gekrümmt oder abgewinkelt ausgebildet ist, dass sich das mindestens eine Hebelelement und das jeweils zugehörige Widerlager abhängig von dem Hub des Aktors an unterschiedlichen Orten berühren und dadurch der Hebelarm des jeweiligen Hebelelements variabel ist. Dies hat den Vorteil, dass dadurch sich abhängig von dem Hub ändernde Übersetzungsverhältnisse einfach realisiert sind.

In einer weiteren vorteilhaften Ausgestaltung der Erfindung ist mindestens eines der Hebelelemente kreisförmig oder kreisabschnittförmig ausgebildet. Dies hat den Vorteil, dass dadurch eine besonders hohe Steifigkeit des jeweiligen Hebelelements bewirkt wird und große Kräfte besonders zuverlässig übertragen werden können und Hubverluste gering sind. Ferner kann ein solches Hebelelement in einem kreisförmigen Bauraum, der beispielsweise durch ein zylinderförmiges Gehäuse vorgegeben ist, genutzt werden, um einen langen Hebelarm bei hoher Steifigkeit des Hebelelements zu realisieren.

Ausführungsbeispiele der Erfindung sind im Folgenden anhand der schematischen Zeichnungen erläutert. Es zeigen:
Figur 1 ein Ventil,
Figur 2A ein vergrößerter Ausschnitt einer ersten Ausführungsform des Ventils,
Figur 2B ein Querschnitt der ersten Ausführungsform,
Figur 3A ein vergrößerter Ausschnitt einer zweiten Ausführungsform des Ventils und
Figur 3B ein Querschnitt der zweiten Ausführungsform.

Elemente gleicher Konstruktion oder Funktion sind figurenübergreifend mit den gleichen Bezugszeichen versehen.

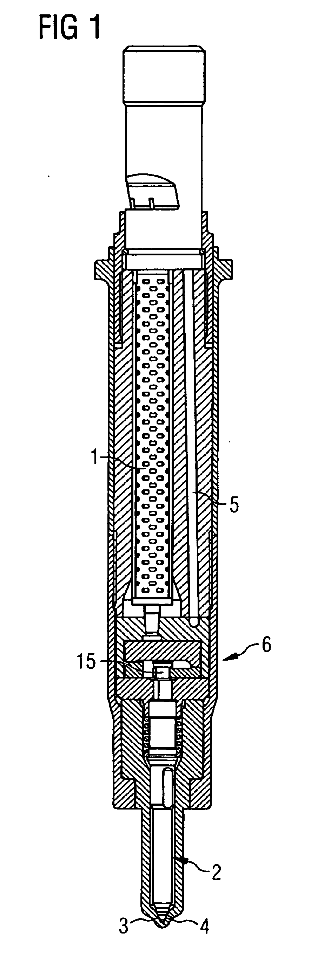

Ein Ventil, z.B. ein Einspritzventil für eine Brennkraftmaschine eines Kraftfahrzeugs, insbesondere ein Common-Rail Diesel-Einspritzventil, umfasst einen Aktor 1 und einen Schließkörper 2 (Figur 1). Der Aktor 1 ist vorzugsweise als ein Piezoaktor ausgebildet, kann jedoch auch anders ausgebildet sein. Der Schließkörper 2 sitzt in einer Schließposition des Ventils auf einem Ventilsitz 3 auf und verschließt dadurch eine Einspritzöffnung 4. Die Einspritzöffnung 4 wird freigegeben durch Abheben des Schließkörpers 2 von dem Ventilsitz 3. Ein Kraftstoffzulauf 5 ist vorgesehen, um Kraftstoff, z.B. Dieselkraftstoff, hin zu der Einspritzöffnung 4 zu leiten. Das Ventil umfasst ferner eine Hebelvorrichtung 6, die mechanisch zwischen dem Aktor 1 und dem Schließkörper 2 angeordnet und mit diesem gekoppelt ist. Der Schließkörper 2 umfasst eine Ventilnadel, die mit dem Ventilsitz 3 zusammenwirkt, und einen Ventilkolben 15, der mit der Hebelvorrichtung 6 zusammenwirkt.

Die Hebelvorrichtung 6 ist so ausgebildet, dass die Richtung des Hubs des Schließkörpers 2 entgegensetzt zu der Richtung des Hubs des Aktors 1 verläuft. Dadurch kann bei der gezeigten Anordnung des Aktors 1 das Ventil durch Abheben des Schließkörpers 1 von dem Ventilsitz 3 nach innen geöffnet werden, wenn der Aktor 1 so angesteuert wird, dass dieser sich verlängert. Das Ventil wird geschlossen, indem der Aktor 1 so angesteuert wird, dass dieser sich verkürzt.

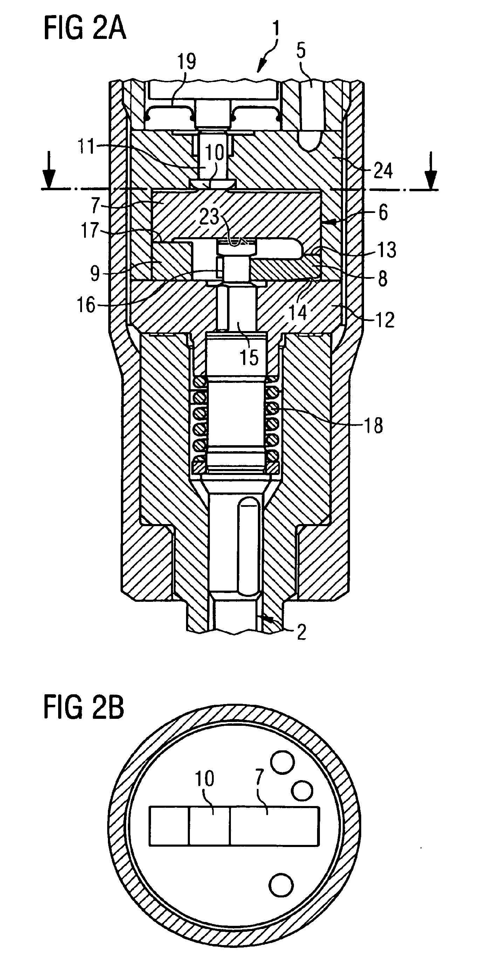

Figur 2A und Figur 2B zeigen eine erste Ausführungsform des Ventils und insbesondere der Hebelvorrichtung 6. Die Hebelvorrichtung 6 ist in einem Hochdruckbereich des Ventils angeordnet und somit von Kraftstoff umspült. Der Aktor 1 ist jedoch außerhalb des Hochdruckbereichs angeordnet. Der Aktor 1 ist über einen Stift 11 mit der Hebelvorrichtung 6 gekoppelt. Der Stift 11 ist im Wesentlichen dicht in einem Gehäusekörper 24 geführt, so dass nur eine geringe Kraftstoffmenge durch Leckage zu dem Aktor 1 gelangen kann. Der Aktor 1 ist durch eine Membrandichtung 19 abgedichtet. Der Aktor 1 wird durch den an die Membrandichtung 19 angrenzenden Kraftstoff gekühlt.

Die Hebelvorrichtung 6 umfasst ein erstes Hebelelement 7 und ein zweites Hebelelement 8. Das erste Hebelelement 7 ist auf einem ersten Widerlagerkörper 9 ortsfest gelagert. Das erste Hebelelement 7 weist einen vorstehend ausgebildeten Antriebsbereich 10 auf, auf den der Stift 11 einwirkt.

Der erste Widerlagerkörper 9 ist auf einem zweiten Widerlagerkörper 12 angeordnet. Auf dem zweiten Widerlagerkörper 12 ist gegenüberliegend das zweite Hebelelement 8 gelagert. Ferner ist das erste Hebelelement 7 über ein Lager 13 an dem zweiten Hebelelement 8 gelagert. Dadurch sind das erste Hebelelement 7 und das zweite Hebelelement 8 unmittelbar mechanisch miteinander gekoppelt.

Das zweite Hebelelement 8 liegt mit einer Hebelfläche 14 auf dem zweiten Widerlagerkörper 12 auf. Die Hebelfläche 14 ist so gekrümmt oder abgewinkelt ausgebildet, dass sich das zweite Hebelelement 8 und der zweite Widerlagerkörper 12 abhängig von dem Hub des Aktors 1 an unterschiedlichen Orten berühren. Dadurch ist die Hubübersetzung des Hebelarms des zweiten Hebelelements 8 variabel. Durch entsprechendes Ausbilden der Hebelfläche 14 weist die Hebelvorrichtung 6 abhängig von dem Hub des Aktors 1 mindestens zwei voneinander unterschiedliche Übersetzungsverhältnisse auf. Die Hebelfläche 14 ist dazu z.B. in mindestens zwei unterschiedlich stark abgewinkelte Segmente unterteilt ausgebildet. Das Übersetzungsverhältnis kann jedoch ebenso kontinuierlich durch eine gekrümmt ausgebildete Hebelfläche 14 variabel sein. Die gekrümmt oder abgewinkelt ausgebildete Hebelfläche 14 kann auch an dem zweiten Widerlagerkörper 12 ausgebildet sein.

Das Ventil weist eine Ventilfeder 18 auf, die den Schließkörper 2 in ihre Schließposition drückt. Dadurch ist sichergestellt, dass das Ventil geschlossen ist, wenn das Ventil nicht in Betrieb ist. Zusätzlich zu der Federkraft der Ventilfeder 18 wirkt auf den Schließkörper 2 der Kraftstoffdruck des über den Kraftstoffzulauf 5 zugeführten Kraftstoffs. Der Kraftstoffdruck kann z.B. größer als 2000 bar sein. Dadurch muss eine sehr hohe Kraft aufgebracht werden, um den Schließkörper 2 von dem Ventilsitz 3 abzuheben. Ferner muss der Schließkörper 2 für das Einspritzen des Kraftstoffs so weit von dem Ventilsitz 3 abgehoben werden, dass eine vorgegebene Kraftstoffmenge in einer vorgegebenen Zeitdauer eingespritzt werden kann.

Die Enden der Hebelarme und die Widerlager weisen axial gerichtete Verdickungen zur Erhöhung der Steifigkeit auf.

Zum Abheben des Schließkörpers 2 von dem Ventilsitz 3 ist eine besonders hohe Kraft erforderlich. Daher ist es vorteilhaft, die Hebelvorrichtung 6 so auszubilden, dass das Übersetzungsverhältnis des Hubs des Aktors 1 zu dem Hub des Schließkörpers 2 in einer ersten Phase eines Öffnungsvorgangs des Ventils z.B. etwa 1:1 beträgt. Nach dem Abheben des Schließkörpers 2 von dem Ventilsitz 3 und dem Freigeben der Einspritzöffnung 4 kann ein Druckausgleich stattfinden, so dass der Schließkörper 2 im Wesentlichen nur noch gegen die Federkraft der Ventilfeder 18 weiter bewegt werden muss. Um einen möglichst großen Hub des Schließkörpers 2 zu erhalten, ist das Übersetzungsverhältnis in dieser zweiten Phase des Öffnungsvorgangs des Ventils kleiner, z.B. bis zu etwa 1:10.

Der Ventilkolben 15 des Schließkörpers 2 weist eine als seitlichen Eingriff ausgebildete erste Ausnehmung 16 auf. Die erste Ausnehmung 16 mündet in die Mantelfläche des Schließkörpers 2 und ist so ausgebildet, dass das zweite Hebelelement 8 in die erste Ausnehmung 16 eingreifen kann. Das zweite Hebelelement 8 greift so in die erste Ausnehmung 16 ein, dass eine Kraft, die von dem zweiten Hebelelement 8 auf den Schließkörper 2 übertragen wird, bezogen auf einen Querschnitt des Ventilkolbens 15 bzw. des Schließkörpers 2 etwa zentral angreift. Dadurch kann der Schließkörper 2 einfach und ohne zu verkannten axial bewegt werden. Ferner kann die durch das zweite Hebelelement 8 auf den Schließkörper 2 übertragene Kraft sehr groß sein.

Die Hebelelemente 7,8 sind vorzugsweise radial schwimmend gelagert, dies ist ohne Verkanten möglich, da im Wesentlichen nur axiale Kräfte im Hebelübersetzungsmechanismus von Aktor bis Düsennadel wirken.

Das erste Hebelelement 7 und/oder das zweite Hebelelement 8 sind balkenförmig ausgebildet. Die Hebelelemente können so besonders steif ausgebildet sein. Die hohe Steifigkeit des ersten Hebelelements 7 und des zweiten Hebelelements 8 vermindert Hubverluste durch Verformung der Hebelelemente. Vorteilhaft ist in diesem Zusammenhang ferner, das erste Hebelelement 7 so auszubilden, dass ein erstes Lager 17, das zwischen dem ersten Hebelelement 7 und dem ersten Widerlagerkörper 9 gebildet ist, auf die Längsachse des Ventils bezogen näher bei dem Aktor 1 anzuordnen als das Lager 13 zwischen dem ersten Hebelelement 7 und dem zweiten Hebelelement 8. Ferner ist es vorteilhaft, die Kraftwirkungsachse des Aktors 1 und die Kraftwirkungsachse des Schließkörpers 2 zueinander parallel versetzt anzuordnen. Dadurch kann eine besonders gute Hebelwirkung erzielt werden und der Bauraum optimal ausgenutzt werden.

Das Ventil weist eine Hubbegrenzung für den Schließkörper 2 auf. Die Hubbegrenzung ist durch das erste Hebelelement 7 gebildet, das in der Bewegungsachse des Schließkörpers 2 angeordnet ist. Das Ventil weist also seinen maximalen Öffnungszustand auf, wenn der Schließkörper 2 bzw. der Ventilkolben 15 auf eine Aufschlagfläche 23 des ersten Hebelelements 7 auftrifft, die dem Ventilkolben 15 zugewandt ist. Das Auftreffen des Schließkörpers 2 auf die Aufschlagfläche 23 des ersten Hebelelements 7 wirkt über das erste Hebelelement 7 und den Stift 11 auf den Aktor 1 ein. Insbesondere wenn der Aktor 1 als Piezoaktor ausgebildet ist, kann durch das Auftreffen des Schließkörpers 2 auf die Aufschlagfläche 23 des ersten Hebelelements 7 in elektrischen Größen des Piezoaktors ein Signal erzeugt werden, z.B. in einer elektrischen Spannung des Piezoaktors. Dieses Signal kann beispielsweise durch eine nicht dargestellte Steuereinrichtung erfasst und ausgewertet werden. Abhängig von dem Signal, z.B. von einem Zeitpunkt des Auftretens des Signals, können so Ansteuerparameter für das Ansteuern des Aktors 1 angepasst werden, um die gewünschte Kraftstoffmenge möglichst präzise zumessen zu können.

Es können auch mehr als das erste und das zweite Hebelelement 7, 8 in der Hebelvorrichtung 6 vorgesehen sein, die mechanisch in Reihe angeordnet sind. Jeweils zwei aufeinander folgende Hebelelemente sind unmittelbar mechanisch miteinander gekoppelt.

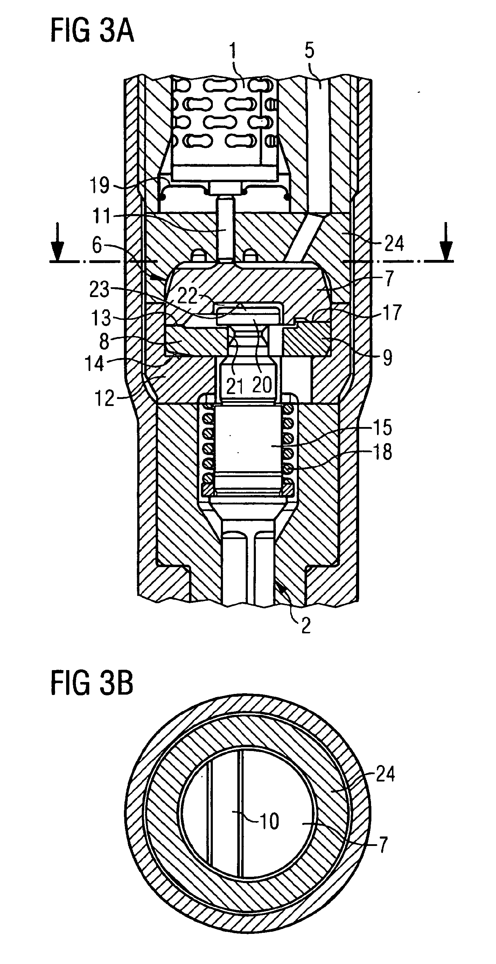

Figur 3A und Figur 3B zeigen eine zweite Ausführungsform des Ventils und insbesondere der Hebelvorrichtung 6. Das erste Hebelelement 7 ist kreisförmig ausgebildet, so dass es eine Querschnittsfläche eines Innenraumes des zylindrisch ausgebildeten Gehäusekörpers 24 nahezu vollständig ausfüllt. Durch das kreisförmige Ausbilden des ersten Hebelelements 7 kann der zur Verfügung stehende Bauraum ausgenutzt werden und einerseits eine große Hebelwirkung durch den langen Hebelarm und andererseits eine hohe Steifigkeit aufgrund der Ausgestaltung des ersten Hebelelements 7 realisiert werden. Das zweite Hebelelement 8 ist beispielsweise kreisabschnittförmig ausgebildet.

Der Ventilkolben 15 weist einen Bund 20 auf. Das zweite Hebelelement 8 ist gabelförmig ausgebildet und weist mindestens zwei Zinken 21 auf. Die mindestens zwei Zinken 21 greifen so an dem Bund 20 des Ventilkolbens 15 an, dass die Kraft von dem zweiten Hebelelement 8 auf den Schließkörper 2 übertragen werden kann. Die Zinken 21 greifen so an den Bund 20 an, dass der Schließkörper 2 symmetrisch belastet ist und ohne zu verkannten axial bewegt werden kann.

Das erste Hebelelement 7 weist in dem Bereich der Aufschlagfläche 23 eine zweite Ausnehmung 22 auf. Abhängig von der Tiefe der zweiten Ausnehmung 22 ist die Hebelvorrichtung 6 so besonders kompakt ausgebildet und/oder kann der Hub des Schließkörpers 2 besonders groß sein.

Sowohl in der ersten als auch in der zweiten Ausführungsform des Ventils wirken alle Kräfte, z.B. die Kraft des Aktors 1, die jeweils auf die Hebelelemente und deren Widerlager wirkenden Kräfte und die auf den Schließkörper 2 wirkende Kraft, im Wesentlichen nur parallel zu der Längsachse des Ventils.

Vorzugsweise weist das erste Hebelelement eine Hubübersetzung oder eine Hubuntersetzung von 2 bis 4 auf.

Vorzugsweise weisen das erste Hebelelement und das zweite Hebelelement etwa bis zu Beginn des Öffnens des Kraftstoffeinspritzventils eine Gesamthubübersetzung von 0,5 bis 2 auf und nach Öffnen des Ventils eine Gesamthubübersetzung von 4 bis 10 auf. Dadurch steht zum Öffnen des Kraftstoffeinspritzventils eine größere Kraft zur Verfügung. Nach Öffnen des Kraftstoffeinspritzventils verringert sich die benötigte Öffnungskraft, zum Schnellen Öffnen ist hier ein höherer Hubübersetzung nötig.

## Patentansprüche

1. Kraftstoffeinspritzventil, das umfasst
- einen Aktor (1),
- einen Schließkörper (2), der durch den Aktor (1) bewegbar ist zum Öffnen und Schließen des Ventils und dessen Hub abhängig ist von dem Hub des Aktors (1), und
- eine mechanische Hebelvorrichtung (6), die mindestens ein erstes und ein zweites Hebelelement (7, 8) umfasst, die mechanisch in Reihe zwischen dem Aktor (1) und dem Schließkörper (2) angeordnet sind, und die Hebelelemente (7, 8) unmittelbar mechanisch miteinander gekoppelt sind,
**dadurch gekennzeichnet, dass** eines der Hebelelemente so in der Bewegungsachse des Schließkörpers (2) angeordnet ist, dass der Hub des Schließkörpers (2) durch das Hebelelement begrenzt ist.

2. Kraftstoffeinspritzventil nach Anspruch 1, bei dem der Schließkörper (2) eine als seitlichen Eingriff ausgebildete Ausnehmung aufweist, die in eine Mantelfläche des Schließkörpers (2) mündet und in die das zweite Hebelelement (8) so eingreift, dass eine Kraft, die von dem zweiten Hebelelement (8) auf den Schließkörper (2) übertragen wird, bezogen auf einen Querschnitt des Schließkörpers (2) etwa zentral angreift.

3. Kraftstoffeinspritzventil nach Anspruch 1, bei dem
- das zweite Hebelelement (8) gabelförmig mit mindestens zwei Zinken (21) ausgebildet ist,
- der Schließkörper (2) einen Bund (20) umfasst und
- das zweite Hebelelement (8) mit den mindestens zwei Zinken (21) an den Bund (20) angreift zum Übertragen einer Kraft von dem zweiten Hebelelement (8) auf den Schließkörper (2).

4. Kraftstoffeinspritzventil nach einem der vorstehenden Ansprüche, bei dem die Hebelvorrichtung (6) nur zwei Hebelelemente (7, 8) umfasst und so angeordnet ist, dass der Aktor (1) auf das erste Hebelelement (7) einwirkt und das zweite Hebelelement (8) unmittelbar auf den Schließkörper (2) einwirkt.

5. Kraftstoffeinspritzventil nach einem der vorstehenden Ansprüche, bei dem die Hebelvorrichtung (6) so ausgebildet ist, dass die Richtung des Hubs des Schließkörpers (2) entgegengesetzt zu der Richtung des Hubs des Aktors (1) verläuft.

6. Kraftstoffeinspritzventil nach einem der vorstehenden Ansprüche, bei dem die Kraftwirkungsachse des Aktors (1) und die Kraftwirkungsachse des Schließkörpers (2) parallel versetzt zueinander angeordnet sind.

7. Kraftstoffeinspritzventil nach einem der vorstehenden Ansprüche, bei dem die mechanische Hebelvorrichtung (6) abhängig von dem Hub des Aktors (1) mindestens zwei voneinander unterschiedliche Übersetzungsverhältnisse aufweist.

8. Kraftstoffeinspritzventil nach Anspruch 7, bei dem mindestens eines der Hebelelemente oder dessen zugehöriges Widerlager eine Hebelfläche (14) aufweist, die so gekrümmt oder abgewinkelt ausgebildet ist, dass sich das mindestens eine Hebelelement und das jeweils zugehörige Widerlager abhängig von dem Hub des Aktors (1) an unterschiedlichen Orten berühren und **dadurch** der Hebelarm des jeweiligen Hebelelements variabel ist.

9. Kraftstoffeinspritzventil nach einem der vorstehenden Ansprüche, bei dem mindestens eines der Hebelelemente kreisförmig oder kreisabschnittförmig ausgebildet ist.

10. Kraftstoffeinspritzventil nach einem der vorstehenden Ansprüche, bei dem das erste Hebelelement eine Hubübersetzung oder eine Hubuntersetzung von 2 bis 4 hat.

11. Kraftstoffeinspritzventil nach einem der vorstehenden Ansprüche, bei dem das erste Hebelelement und das zweite Hebelelement etwa bis zu Beginn des Öffnens des Ventils eine Gesamthubübersetzung von 0,5 bis 2 hat und nach Öffnen des Ventils eine Gesamthubübersetzung von 4 bis 10 hat.

12. Kraftstoffeinspritzventil nach einem der vorstehenden Ansprüche, bei dem das erste und das zweite Hebelelement verkantungssicher radial schwimmend gelagert sind, indem im Wesentlichen nur axiale Kräfte im Hebelübersetzungsmechanismus von Aktor bis Düsennadel wirken.

13. Kraftstoffeinspritzventil nach einem der vorstehenden Ansprüche, bei dem mindestens eines der Widerlager kreisförmig oder kreisabschnittförmig ausgebildet ist.

## Claims

1. Fuel injection valve comprising
- an actuator (1),
- a closing member (2) which is able to be moved by the actuator (1) to open and close the valve and of which the stroke is dependent on the stroke of the actuator (1), and
- a mechanical lever apparatus (6), having at least one first and one second lever element (7, 8) which are disposed mechanically in series between the actuator (1) and the closing member (2) and the lever elements (7, 8) are directly coupled mechanically to one another,
**characterised in that** one of the lever elements is disposed in the axis of movement of the closing member (2) such that the stroke of the closing member is limited by the lever element.

2. Fuel injection valve according to claim 1, in which the closing member (2) has a recess embodied as a lateral engagement point which opens out into a jacket surface of the closing member (2) and into which the second lever element (8) engages so that a force transmitted by the second lever element (8) to the closing member (2) acts approximately centrally with respect to a cross section of the closing member (2).

3. Fuel injection valve according to claim 1, in which
- the second lever element (8) is embodied in the shape of a fork with at least two tines (21),
- the closing member (2) includes a collar (20) and
- the second lever element (8) acts on the collar (20) with at least two tines (21) to transmit a force from the second lever element (8) to the closing member (2).

4. Fuel injection valve according to one of the previous claims, in which the lever apparatus (6) only comprises two lever elements (7, 8) and is disposed such that the actuator (1) acts on the first lever element (7) and the second lever element (8) acts directly on the closing member (2).

5. Fuel injection valve according to one of the previous claims, in which the lever apparatus (6) is embodied such that the stroke of the closing member (2) runs in the opposite direction to the stroke of the actuator (1).

6. Fuel injection valve according to one of the previous claims, in which the effective force axis of the actuator (1) and the effective force axis of the closing member (2) are arranged in parallel, offset in relation to each other.

7. Fuel injection valve according to one of the previous claims, in which the mechanical lever apparatus (6) has at least two independent transmission ratios, depending on the stroke of the actuator (1).

8. Fuel injection valve according to claim 7, in which at least one of the lever elements or its associated thrust bearing has a lever surface (14) which is embodied curved or angled so that the at least one lever element and the respective associated thrust bearing touch at different locations depending on the stroke of the actuator (1) and this makes the lever arm of the respective lever element variable.

9. Fuel injection valve according to one of the previous claims, in which at least one of the lever elements is embodied in the shape of a circle or a circle segment.

10. Fuel injection valve according to one of the previous claims, in which the first lever element has an upwards or a downwards stroke transmission ratio of between 2 and 4.

11. Fuel injection valve according to one of the previous claims in which the first lever element and the second lever element, up to around the beginning of the opening of the valve, have an overall stroke transmission ratio of 0.5 to 2 and after opening of the valve have an overall stroke transmission ratio of 4 to 10.

12. Fuel injection valve according to one of the previous claims, in which the first and the second lever element are supported radially floating in an anti-tilt manner in that essentially only axial forces act in the lever transmission mechanism from actuator to valve needle.

13. Fuel injection valve according to one of the previous claims, in which at least one of the thrust bearings is embodied in the shape of a circle or a circle segment.

## Revendications

1. Soupape d'injection de carburant, qui comporte
- un actionneur (1)
- un corps de fermeture (2), qui peut être déplacé par l'actionneur (1) pour l'ouverture et la fermeture de la soupape et dont la course est fonction de la course de l'actionneur (1), et
- un dispositif de levier (6) mécanique, qui comporte au moins un premier et un deuxième élément de levier (7, 8), qui sont disposés mécaniquement en rang entre l'actionneur (1) et le corps de fermeture (2), et les éléments de levier (7, 8) sont couplés mécaniquement directement l'un à l'autre,
**caractérisée en ce que** l'un des éléments de levier est agencé dans l'axe de déplacement du corps de fermeture (2), de telle sorte que la course du corps de fermeture (2) est limitée par l'élément de levier.

2. Soupape d'injection de carburant selon la revendication 1, dans laquelle le corps de fermeture (2) comporte un évidement réalisé sous la forme d'un engagement latéral, qui débouche dans la paroi latérale du corps de fermeture (2) et dans laquelle s'engage le deuxième élément de levier (8) de telle sorte qu'une force, qui est transmise par le deuxième élément de levier (8) sur le corps de fermeture (2), s'applique sensiblement au milieu par rapport à une section du corps de fermeture (2).

3. Soupape d'injection de carburant selon la revendication 1, dans laquelle
- le deuxième élément de levier (8) est réalisé en forme de fourche avec au moins deux dents (21),
- le corps de fermeture (2) comporte un collet de butée (20), et
- le deuxième élément de levier (8) entre en contact avec lesdites au moins deux dents (21) contre le collet de butée (20) pour transmettre une force du deuxième élément de levier (8) sur le corps de fermeture (2).

4. Soupape d'injection de carburant selon l'une quelconque des revendications précédentes, dans laquelle le dispositif de levier (6) comporte seulement deux éléments de levier (7, 8) et est agencé de telle sorte que l'actionneur (1) agit sur le premier élément de levier (7), et le deuxième élément de levier (8) agit directement sur le corps de fermeture (2).

5. Soupape d'injection de carburant selon l'une quelconque des revendications précédentes, dans laquelle le dispositif de levier (6) est réalisé de telle sorte que le sens de la course du corps de fermeture (2) est opposé au sens de la course de l'actionneur (1).

6. Soupape d'injection de carburant selon l'une quelconque des revendications précédentes, dans laquelle l'axe d'action de la force de l'actionneur (1) et l'axe d'action de la force du corps de fermeture (2) sont disposés parallèlement de manière décalée l'un à l'autre.

7. Soupape d'injection de carburant selon l'une quelconque des revendications précédentes, dans laquelle le dispositif de levier (6) mécanique, en fonction de la course de l'actionneur (1), possède au moins deux rapports de développement différents l'un de l'autre.

8. Soupape d'injection de carburant selon la revendication 7, dans laquelle au moins l'un des éléments de levier ou la contre-butée associée de celui-ci comporte une surface de levier (14), qui est courbée ou coudée de telle sorte que ledit au moins un élément de levier et la contre-butée respectivement associée touchent des emplacements différents en fonction de la course de l'actionneur (1), et, de ce fait, le bras de levier de l'élément de levier concerné est variable.

9. Soupape d'injection de carburant selon l'une quelconque des revendications précédentes, dans laquelle au moins l'un des éléments de levier est réalisé avec une forme circulaire ou une forme en segment de cercle.

10. Soupape d'injection de carburant selon l'une quelconque des revendications précédentes, dans laquelle le premier élément de levier a une surmultiplication de course ou une démultiplication de course de 2 à 4.

11. Soupape d'injection de carburant selon l'une quelconque des revendications précédentes, dans laquelle le premier élément de levier et le deuxième élément de levier ont, à peu près au début de l'ouverture de la soupape, une surmultiplication globale de 0,5 à 2 et, après l'ouverture de la soupape, une surmultiplication globale de 4 à 10.

12. Soupape d'injection de carburant selon l'une quelconque des revendications précédentes, dans laquelle le premier et le deuxième élément de levier sont montés de manière radialement flottante sans risque de blocage, du fait que pratiquement seules des forces axiales agissent dans le mécanisme de surmultiplication du levier depuis l'actionneur jusqu'au pointeau de la buse.

13. Soupape d'injection de carburant selon l'une quelconque des revendications précédentes, dans laquelle au moins l'une des contre-butées est réalisée avec une forme circulaire ou une forme en segment de cercle.
